# EUROPÄISCHE PATENTSCHRIFT

(11) **EP 4 331 870 B1**
(45) Veröffentlichungstag und Bekanntmachung des Hinweises auf die Patenterteilung: **23.07.2025**
(21) Anmeldenummer: 23190020.0
(22) Anmeldetag: 07.08.2023
(51) Int. Cl.: B60C 13/02

(54) **FAHRZEUGREIFEN**
VEHICLE TYRE
BANDAGE PNEUMATIQUE POUR VÉHICULES

(30) Priorität: 29.08.2022 DE 102022208940
(43) Veröffentlichungstag der Anmeldung: 06.03.2024
(73) Patentinhaber: Continental Reifen Deutschland GmbH, 30175 Hannover (DE)
(72) Erfinder: Behr, Ulrich, 30165 Hannover (DE)
(74) Vertreter: Continental Corporation

(56) Entgegenhaltungen:
- EP-A1- 2 277 719
- EP-A1- 4 311 692
- DE-A1- 102012 217 824
- JP-A- 2013 071 660
- US-A1- 2011 036 475

## Beschreibung

Die Erfindung betrifft einen Fahrzeugreifen mit zumindest einem im Bereich zumindest einer Reifenschulter und/oder zumindest einer Reifenseitenwand ausgebildeten Strukturbereich mit einer eine insbesondere glatte Oberfläche aufweisenden Basisfläche, auf welcher wenigstens drei oberflächliche, in Draufsicht kreisförmigen Vertiefungen ausgebildet sind.

Um den Verbrauch fossiler Brennstoffe und die Treibhausgasemissionen zu reduzieren, wurde in den letzten Jahren der Verringerung des Kraftstoffverbrauches von Fahrzeugen besondere Aufmerksamkeit geschenkt. Was Fahrzeugreifen betrifft, stehen vor allem Maßnahmen im Vordergrund, die eine Verringerung des Rollwiderstandes der Reifen bewirken. In letzter Zeit rücken jedoch auch die aerodynamischen Eigenschaften von Fahrzeugreifen und deren Beitrag zum Strömungswiderstand des Fahrzeuges, insbesondere bei Personenkraftwagen, mehr in den Vordergrund. Nachdem Fahrzeugreifen üblicherweise nicht vollständig von der Fahrzeugkarosserie umschlossen sind, werden auch die Reifenseitenwände und die Reifenschultern vom Fahrtwind umströmt und tragen zum aerodynamischen Gesamtprofil des jeweiligen Fahrzeuges bei. Insbesondere bei hohen Fahrgeschwindigkeiten des Fahrzeuges treten im Bereich der Seitenwände der Reifen hohe Umströmungsgeschwindigkeiten auf, die auf einen erhöhten Luftwiderstand, welcher sich auch auf den Treibstoffverbrauch des Fahrzeuges auswirkt, Einfluss nehmen. Die in üblicher Weise strukturierten Oberflächen der Reifenseitenwände beeinflussen beim Abrollen der Reifen das Entstehen von Turbulenzen und Abrissen der Luftströmung in der Grenzschicht, sodass je nach Ausgestaltung sogar der Luftwiderstand in unerwünschter Weise erhöht sein kann.

Es ist bereits bekannt, Fahrzeugreifen mit speziell strukturierten Oberflächen an den Reifenseitenwänden zu versehen, um einen reduzierten Luftwiderstand zu erzielen. So ist beispielsweise aus der DE 10 2010 036 765 A1 ein Fahrzeugluftreifen mit einer Oberflächenstruktur auf den Reifenseitenwänden bekannt, welche als Netz von konzentrisch zur Reifenachse gekrümmt ausgebildeten gitterförmigen Strukturen ausgebildet ist, wobei die gitterförmigen Strukturen jeweils Oberflächenelemente unmittelbar eng umschließen und gegenüber den von ihnen umschlossenen Oberflächenelementen erhaben ausgebildet sind. Dieses engmaschige dichte Netz von konzentrisch zur Reifenachse gekrümmt ausgebildeten gitterförmigen Strukturen soll bei hoher Geschwindigkeit das Entstehen von Miniturbulenzen in der Grenzschicht der die Reifenseitenwandoberfläche umströmenden Luft in den Vertiefungen bewirken, um derart die Abrisskanten der die Reifenseitenwandoberfläche umströmenden laminaren Strömung zu versetzen und den Luftwiderstand herabzusetzen. Ein weiterer Fahrzeugluftreifen, welcher den Luftwiderstand während der Rollbewegung verringern helfen soll, ist aus der DE 11 2014 000 477 T5 bekannt. Auf zumindest einem Bereich der Seitenwandoberfläche ist eine Vielzahl von grübchenförmigen, insbesondere kreisrunden Vertiefungen ausgebildet, die periodisch in ihrer Größe entlang der Reifenumfangsrichtung variieren und in eine Hintergrundschraffur aus parallel zueinander verlaufenden Erhebungen eingebettet sind. Die kreisförmigen Vertiefungen weisen eine maximale Tiefe von 0,3 mm bis 1,5 mm auf. Ein weiterer Fahrzeugluftreifen mit strukturierten Oberflächenbereichen an den Reifenseitenwänden, die einen reduzierten Luftwiderstand bei guter Abriebfestigkeit der Struktur ermöglichen sollen, ist aus der WO 2013/010726 A1 bekannt. Dazu wird die Oberfläche zumindest einer der Seitenwände in zumindest einem Umfangsabschnitt mit in radialer Richtung und in Umfangsrichtung nebeneinander verteilt angeordneten ringförmigen und linienförmigen Strukturen versehen, wobei die linienförmigen Strukturen jeweils ein Oberflächenelement unmittelbar eng zumindest teilweise umschließen und linienförmige Vertiefungen bilden. Das derart gebildete engmaschige dichte Netz von ringförmigen, linienförmigen Vertiefungen, welche jeweils Oberflächenelemente unmittelbar eng umschließen, bewirkt bei hohen Geschwindigkeiten in der Grenzschicht der die Reifenseitenwandoberfläche umströmenden Luft das Entstehen von Miniturbulenzen, welche die Abrisskanten der die Reifenseitenwandoberfläche umströmenden laminaren Strömung versetzen und den Luftwiderstand herabsetzen sollen. DE 102012217824 A1 beschreibt eine Luftreifeneinheit, welche zu einer Verbesserung der Luftströmung um einen Reifen führen soll, wobei eine Mehrzahl von Vertiefungen in mindestens einem Reifenseitenabschnitt eines Vorderreifens bereitgestellt wird. US 2011/036475 A1 beschreibt einen Reifen mit mehreren Aussparungen, die über eine Reifenumfangsrichtung und eine radiale Reifenrichtung in einem Bereich vorgesehen sind, der auf einer Reifenaußenfläche definiert ist. JP 2013071660 A beschreibt eine Reifen-Rad-Baugruppe, die in der Lage ist, die Luftströmung um einen Reifen und ein Rad zu verbessern, wobei ein Luftreifen mit einer großen Anzahl von Reifenaussparungen versehen ist, die an jenen Reifenseitenteilen vorgesehen sind, welche an beiden Außenseiten des Fahrzeugs angeordnet sind. EP 2277719 A1 beschreibt einen Reifen, wobei in der Seitenwand Grübchen ausgebildet sind, wobei die Grübchen die planare Form eines Kreises annehmen; wenn Luft in ein Grübchen strömt, entsteht eine turbulente Strömung, wodurch die Wärme des Reifens an die Atmosphäre abgegeben werden soll. EP 4311692 A1 beschreibt einen Fahrzeugreifen mit einem im Bereich einer Reifenschulter und/oder einer Reifenseitenwand ausgebildeten Strukturbereich mit einer Vielzahl von oberflächlichen, in Draufsicht kreisförmigen Vertiefungen, wobei jeweils zwei Vertiefungen paarweise über eine gegenüber dem Durchmesser der Vertiefungen verengte Verbindungsstelle miteinander verbunden sind, und langgestreckte Strukturelemente bilden, die jeweils in Umfangsrichtung des Reifens orientiert sind.

Es ist bekannt, dass das Dimplemuster auf der Oberfläche von Golfbällen den Strömungswiderstandskoeffizienten durch ein Absenken des Druckwiderstandes reduziert und auf diese Weise den Luftwiderstand von Golfbällen um bis zu 50 % verringern kann. Kleine Verwirbelungen innerhalb der Dimples verändern die laminare Grenzschicht um den Ball in eine turbulente Grenzschicht. Die Strömung löst sich verzögert ab, es herrscht ein Unterdruck. Je kleiner die Zone ist, desto geringer ist die Druckdifferenz zur Anströmseite und damit die Abbremsung in Flugrichtung.

Der Erfindung liegt die Aufgabe zugrunde, das von Golfbällen her bekannte Konzept der Dimplemuster auf eine innovative und besonders vorteilhafte Weise zur Reduktion des Luftwiderstandes auf Fahrzeugreifen zu übertragen.

Die gestellte Aufgabe wird erfindungsgemäß dadurch gelöst, dass wenigstens eine erste Vertiefung durch eine relativ zu der ersten Vertiefung in Umfangsrichtung vordere Verbindungsstelle und/oder eine relativ zu der ersten Vertiefung in Umfangsrichtung hintere Verbindungstelle mit einer relativ zu der ersten Vertiefung in Umfangsrichtung vorderen Vertiefung und/oder einer relativ zu der ersten Vertiefung in Umfangsrichtung hinteren Vertiefung verbunden ist, wobei jede Verbindungsstelle gegenüber dem Durchmesser der Vertiefungen verengt ist und wobei die Anzahl der an eine Vertiefung angeschlossenen Verbindungsstellen für verschiedene Vertiefungen wenigstens zwei verschiedene Werte aus der Wertemenge 0, 1 oder 2 annimmt.

Durch die Erfindung wird überraschenderweise eine aerodynamisch besonders voreilhafte Oberflächenstruktur an Reifenseitenwänden und/oder Reifenschultern zur Verfügung gestellt, welche den Strömungswiderstand des Fahrzeugreifens tatsächlich reduziert. Die in Umfangsrichtung miteinander verbundenen Vertiefungen wirken auf besonders effektive Weise bei höherer Fahrgeschwindigkeit bzw. unter höherer Rotation der Fahrzeugreifen als Turbulatoren, die eine laminare Grenzschicht in eine turbulente überführen, einen Strömungsabriss hinauszuzögern und somit ein längeres Anliegen der Strömung gewährleisten, was den Druckwiderstand verringert.

Die Richtungsbezeichnungen axial, in Axialrichtung, radial, in Radialrichtung und in Umfangsrichtung beziehen sich auf den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft. Die Axialrichtung bezieht sich auf eine Richtung parallel zur Drehachse. Axial nach innen zeigend bezieht sich dabei auf eine Orientierung, die einer Reifenäquatorialebene bzw. einer Reifenäquatorlinie axial zugewandt ist. Die Reifenäquatorialebene ist eine zur Rotationsachse des Fahrzeugreifens senkrechte Ebene, die durch die Mitte der axialen Breite des Fahrzeugreifens verläuft, wobei die Reifenäquatoriallinie in der Reifenäquatorialebene und auf der Oberfläche des Fahrzeugreifens verläuft.

Die mit den Merkmalen des Hauptanspruchs erzielten Effekte werden durch bevorzugte Ausführungsformen und Ausgestaltungen der Vertiefungen und Verbindungsstellen unterstützt und weiter verstärkt.

Besonders bevorzugt ist eine Ausführung, bei welcher die Verbindungsstellen an der Basisfläche jeweils von zueinander nach innen gewölbten Rändern begrenzt sind, die jeweils tangential in die kreisförmig verlaufenden Ränder zweier miteinander verbundener Vertiefungen übergehen.

Die tangentialen Übergänge befinden sich bevorzugt jeweils am Endbereich der Endpunkte einer Kreissehne der kreisförmigen Ränder der Vertiefungen, wobei diese Kreissehnen eine Länge von 20% bis 70%, insbesondere von 30% bis 40%, des Durchmessers der Vertiefungen aufweisen und in Radialrichtung bzw. Axialrichtung des Fahrzeugreifens verlaufen.

Um in erwünschter Weise Miniturbulenzen bzw. Turbulatoren bei einer Rotation des Fahrzeugreifens zu erzeugen, ist es vorteilhaft, wenn die verengten Verbindungsstellen eine zwischen den Mittelpunkten der beiden Kreissehnen ermittelte Erstreckungslänge von 15% bis 30% des Durchmessers der Vertiefungen aufweisen und eine in ihrer Mitte und zwischen den Rändern an der Basisfläche ermittelte geringste Breite von 15% bis 30% des Durchmessers der Vertiefungen aufweisen.

Die bis auf jene Stellen, wo die Verbindungen zwischen den Vertiefungen angesetzt sind, kreisförmigen Vertiefungen weisen bevorzugt einen Durchmesser von 3,5 mm bis 6,0 mm und an ihrer tiefsten Stelle, bezogen auf das Niveau der Basisfläche, eine Tiefe von 0,3 mm bis 1,2 mm auf. Eine derartige Dimensionierung der Vertiefungen begünstigt eine aerodynamisch besonders vorteilhafte Oberflächenstruktur.

Aerodynamisch vorteilhaft sind ferner Vertiefungen, welche entweder einen in einer konstanten Tiefe befindlichen Boden und von diesem ausgehend eine am äußeren Rand verlaufende Randflanke aufweisen, die unter einem Winkel von 10° bis 45° in Richtung Boden und relativ zur Basisfläche geneigt ist, oder welche insgesamt als gerundete Mulden mit ihrer tiefsten Stelle im Mittelpunkt ihrer Kreisform ausgebildet sind.

Die verengten Verbindungsstellen sind vorteilhafterweise mit einem Boden versehen, welcher sich, bezogen auf das Niveau der Basisfläche, in einer Tiefe, die höchstens der größten Tiefe der Vertiefungen entspricht und zumindest 0,1 mm beträgt, erstreckt. Auch in den verengten Verbindungsstellen können vom Boden bis zu den Rändern Randflanken reichen, welche bevorzugt in Fortsetzung der vom Rand der Vertiefungen ausgehenden Randflanken verlaufen.

Die erste Vertiefung, die relativ zu der ersten Vertiefung in Umfangsrichtung vordere und/oder hintere Verbindungstelle sowie die in Umfangsrichtung vordere und/oder hintere Vertiefung liegen vorzugsweise radial bzw. axial auf der gleichen Höhe und bilden zusammen eine langgestreckte, in Umfangsrichtung des Reifens ausgerichtete Reihe. Die Bezeichnung radial bzw. axial dient hierbei der übergreifenden Beschreibung von Positionen auf einer in Axialrichtung weisenden Reifenseitenwand bzw. eines in Axialrichtung und Radialrichtung weisenden, angeschrägten Abschnitts einer Reifenschulter.

Gemäß einem Ausführungsbeispiel kann der Strukturbereich aus drei in einer Reihe miteinander verbundenen Vertiefungen bestehen, nämlich aus der ersten Vertiefung, der in Umfangsrichtung vorderen Vertiefung und der in Umfangsrichtung hinteren Vertiefung, wobei die erste Vertiefung durch eine hintere Verbindungsstelle mit der hinteren Vertiefung verbunden ist und die erste Verbindung durch eine vordere Verbindungsstelle mit der vorderen Vertiefung verbunden ist. In diesem Fall beträgt die Anzahl der an die erste Vertiefung angeschlossenen Verbindungsstellen 2 und die Anzahl der an die vordere und hintere Vertiefung angeschlossenen Verbindungsstellen jeweils 1.

Gemäß weiteren alternativen Beispielen können vier oder mehr Vertiefungen in einer Reihe miteinander verbunden sein, sodass die Vertiefungen an den zwei Enden der Reihe jeweils an eine Verbindungsstelle angeschlossen sind und die in der Mitte der Reihe angeordneten Vertiefungen jeweils an zwei Verbindungsstellen angeschlossen sind.

Allgemein gesprochen kann die Anzahl der Vertiefungen in einer Reihe n betragen und die Anzahl der Verbindungsstellen in der Reihe n-1, wobei n eine natürliche Zahl ungleich Null ist. Eine durch n=1 beschriebene Reihe würde somit aus einer einzelnen Vertiefung bestehen.

Insbesondere für den Fall, dass der Strukturbereich auf einer Reifenschulter ausgebildet ist, hat sich gezeigt, dass mit dem Einsatz durch n größer oder gleich 3 beschriebener Reihen neben der vorteilhaften Aerodynamik ein zusätzlicher technischer Effekt erzielt wird, nämlich eine Verbesserung des Nasshandlings. Dies lässt sich dadurch erklären, dass eine in Umfangsrichtung ausgerichteten Reihen aus Vertiefungen und Verbindungsstellen bei Fahrbahnkontakt qualitativ ähnlich wirkt wie ein in Umfangsrichtung verlaufendes übliches Oberflächenelement, beispielsweise ein Einschnitt oder eine Rille, insbesondere indem zusätzliche Kanten gebildet werden, die helfen das Wasser abzuleiten.

Der Strukturbereich kann aus mehreren Reihen bestehen, wobei die mehreren Reihen durch gleiche oder unterschiedliche n beschrieben sein können. Hierbei sind gemäß dem Hauptanspruch lediglich Strukturbereiche mit ausschließlich durch n=1 oder ausschließlich durch n=2 beschriebene Reihen ausgeschlossen. Vorzugsweise umfasst der Strukturbereich wenigstens zwei durch unterschiedliche n beschriebene Reihen.

Der Strukturbereich kann beispielsweise aus einer einzelnen Vertiefung ohne angeschlossene Verbindungsstelle und zwei weiteren Vertiefungen bestehen, wobei die zwei weiteren Vertiefungen beispielsweise als erste Vertiefung und relativ zu der ersten Vertiefung in Umfangsrichtung vordere Vertiefung durch eine relativ zu der ersten Vertiefung in Umfangsrichtung vordere Verbindungsstelle miteinander verbunden sind und ein Zweierpaar bilden. Alternativ kann das Zweierpaar aus der ersten Vertiefung und einer relativ zu der ersten Vertiefung in Umfangsrichtung hinteren Vertiefung, verbunden durch eine relativ zu der ersten Vertiefung in Umfangsrichtung hintere Verbindungsstelle bestehen. In diesen Fällen beträgt die Anzahl der an die einzelne Vertiefung angeschlossenen Verbindungsstellen 0 und die Anzahl der an die zwei weiteren Vertiefungen angeschlossenen Verbindungsstellen jeweils 1.

Es hat sich überaschenderweise gezeigt, dass sich durch die Kombination durch verschiedene n beschriebener Reihen ein besonders vorteilhafter Strukturbereich gestalten lässt. Insbesondere für den Fall, dass der Strukturbereich auf einer Reifenschulter ausgebildet ist, erkennt es die Erfindung als besonders vorteilhaft, die Länge einer Reihe in Abhängigkeit von einem radialen bzw. axialen Abstand der Reihe zu einer Bodenaufstandsfläche (entspricht dem statisch ermittelten Footprint bei einer Last von 70 % der maximalen Tragfähigkeit bei einem Innendruck von 85 %, ermittelt gemäß E.T.R.T.O.-Standards) zu wählen. Insbesondere kann der Strukturbereich eine durch n=k beschriebene Reihe und eine durch n=m beschriebene Reihe umfassen, wobei beide Reihen außerhalb der Bodenaufstandsfläche des Fahrzeugreifens angeordnet sind. Hierbei kann k<m gelten, wobei die durch n=k beschriebene Reihe radial bzw. axial dichter an einem Rand der Bodenaufstandsfläche angeordnet ist als die durch n=m beschriebene Reihe. Dadurch, dass in der Nähe der Bodenaufstandsfläche weniger Vertiefungen und Verbindungsstellen angeordnet werden als in größerer Entfernung von der Bodenaufstandsfläche, kann ein guter Kompromiss zwischen Nasshandling und Trockenhandling erreicht werden, wobei das Trockenhandling bekanntermaßen eher von der Größe einer Fläche des direkten Kontakts zwischen Reifengummi und Fahrbahnuntergrund abhängig ist, wobei eine größere Fläche in direktem Kontakt mehr Grip bedeutet.

Der Strukturbereich kann mehrere in Umfangsrichtung ausgerichtete Reihen von Vertiefungen und Verbindungsstellen umfassen, wobei wenigstens zwei Reihen in Umfangsrichtung hintereinander angeordnet sind und durch keine Verbindungsstelle miteinander verbunden sind. Hierdurch ergibt sich ein größerer Spielraum in der optischen Gestaltung aber auch in der Feinabstimmung zwischen Aerodynamik, Nasshandling und Trockenhandling.

Der Fahrzeugreifen kann mehrere in einer Reifenschulter ausgebildete Strukturbereiche umfassen, wobei sich wenigstens eine Quer- und/oder Schrägrille zwischen jeweils zwei Strukturbereichen erstreckt. Vorzugsweise erstreckt sich die Rille nur teilweise zwischen den zwei Strukturbereichen. Eine sich teilweise zwischen zwei Strukturbereichen erstreckende Rille erstreckt sich nur teilweise über die axiale bzw. radiale Erstreckung eines oder beider der zwei Strukturbereiche. Die Erstreckung eines Strukturbereichs ist durch den äußeren Rand der in axialer bzw. radialer Richtung zu beiden Orientierungen hin jeweils zuäußerst liegenden Vertiefungen begrenzt. Beispielsweise kann sich eine Quer-oder Schrägrille aus dem Reifenprofil in eine Reifenschulter hinein und radial bzw. axial bis zwischen zwei auf der Reifenschulter ausgebildete Strukturbereiche erstrecken, ohne jedoch bis an deren radial inneren bzw. axial äußeren Rand zu reichen. Mit einer teilweisen Erstreckung einer Rille zwischen zwei Strukturbereichen kann ein guter Kompromiss zwischen einer Wasserausleitung durch die Rille und einer aerodynamischen Optimierung durch die Vertiefungen und Verbindungsstellen erzielt werden.

Der Fahrzeugreifen kann ausschließlich im Bereich einer äußeren Reifenschulter einen oder mehrere Strukturbereiche umfassen. Alternativ kann der Fahrzeugreifen sowohl im Bereich einer äußeren Reifenschulter als auch im Bereich einer inneren Reifenschulter jeweils wenigstens einen Strukturbereich umfassen, wobei der Strukturbereich auf der äußeren Reifenschulter mehr Vertiefungen und Verbindungsstellen umfassen kann als der Strukturbereich auf der inneren Reifenschulter. Eine äußere und eine innere Reifenschulter sind nur bei Fahrzeugen mit zwei Fahrzeugreifen je Fahrzeugachse definiert. Hierbei ist die innere Reifenschulter eines ersten Fahrzeugreifens im bestimmungsgemäßen Gebrauch an der Fahrzeugachse der inneren Reifenschulter eines zweiten Fahrzeugreifens an derselben Fahrzeugachse zugewandt, wobei die äußere Reifenschulter bei beiden Fahrzeugreifen jeweils die der inneren Reifenschulter entgegengesetzte Reifenschulter ist. Die Gestaltung der äußeren Reifenschulter hat bei einem typischen Fahrzeug aufgrund dessen Strömungsprofil einen größeren Einfluss auf die Aerodynamik eines Fahrzeugs. Somit ist es vorteilhaft, an der äußeren Reifenschulter mehr aerodynamisch vorteilhafte Vertiefungen und/oder Verbindungsstellen vorzusehen als an der inneren Reifenschulter; durch eine Begrenzung der Anzahl von Vertiefungen und/oder Verbindungsstellen an der inneren Reifenschulter kann im Gegenzug das Trockenhandling verbessert werden. Wenn an der inneren Reifenschulter kein Strukturbereich vorgesehen wird, kann - aus den oben genannten Gründen ohne große Einbuße bei der Aerodynamik - zudem die Herstellung des Reifens vereinfacht werden.

Weiterhin können sich Quer- oder Schrägrillen an der inneren Reifenschulter vollständig zwischen mehreren Strukturbereichen erstrecken, während sich Quer-oder Schrägrillen an der äußeren Reifenschulter nur teilweise und/oder gar nicht zwischen mehreren Strukturbereichen erstrecken können. Hierdurch wird an der äußeren Reifenschulter mit großem Effekt auf die Aerodynamik des Fahrzeugs das aerodynamische Verhalten des Fahrzeugreifens priorisiert, während an der Innenschulter mit wenig Nachteil für die Aerodynamik des Fahrzeugs die Wasserausleitung priorisiert wird. Insbesondere kann der Fahrzeugreifen auch abseits von den beschriebenen, an der Schulter angeordneten Quer- oder Schrägrillen ein asymmetrisches Profil aufweisen.

Ein weiterer Vorteil eines Fahrzeugreifens mit den Merkmalen des unabhängigen Anspruchs und/oder der Unteransprüche liegt in einer kühlenden Wirkung. Es ist bekannt, dass Vertiefungen in einer Reifenseitenwand aufgrund einer dadurch vergrößerten Reifenoberfläche und durch zusätzliche Umströmung die Wärmeabfuhr aus einem Fahrzeugreifen verbessern können. Mit den erfindungsgemäßen Strukturbereichen kann erstens je nach Ausführungsform sogar noch mehr zusätzliche Oberfläche geschaffen werden als mit alleinstehenden, nicht durch Verbindungsstellen verbundenen Vertiefungen. Zweitens werden die in Umfangsrichtung orientierten Reihen aus Vertiefungen und Verbindungsstellen im Fahrbetrieb besonders intensiv umströmt, was den Kühlungseffekt weiter verstärkt.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine perspektivische Ansicht eines Abschnitts einer äußeren Reifenschulter mit Strukturbereichen gemäß einer Ausführungsform des erfindungsgemäßen Fahrzeugreifens,
Figur 2 schematisch eine perspektivische Ansicht eines Abschnitts einer inneren Reifenschulter mit Strukturbereichen gemäß einer Ausführungsform des erfindungsgemäßen Fahrzeugreifens,
Figur 3 die Außenkontur einer Reihe eines Strukturbereiches gemäß einer Ausführungsform der Erfindung,
Figur 4 die Außenkontur einer weiteren Reihe eines Strukturbereiches gemäß einer Ausführungsform der Erfindung,
Figur 5 eine perspektivische Ansicht einer Reihe eines Strukturbereiches gemäß einer Ausführungsform der Erfindung,
Figur 6 eine Schnittansicht entlang der durch die Pfeile gekennzeichneten Linie in Fig. 5,
Figur 7 eine Draufsicht mit Höhenverlaufskonturen gemäß der in den Figuren 5 und 6 gezeigten Ausführungsform,
Figur 8 eine Draufsicht mit Höhenverlaufskonturen auf eine, gegenüber der in den Figuren 5 bis 7 gezeigten Ausführungsform, um eine Vertiefung und eine Verbindungsstelle verlängerten Reihe bei ansonsten gleicher Grundform.

Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge. Jedoch ist die Erfindung auch an Fahrzeugreifen für Fahrzeuge mit ungerader Reifenzahl, insbesondere für Motorräder mit Vorteil einsetzbar.

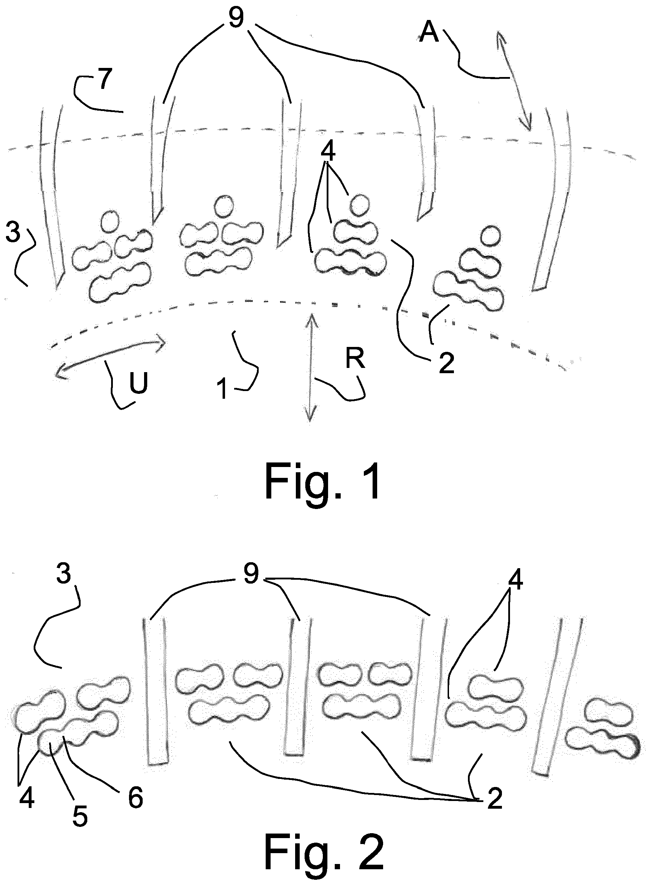

Figur 1 zeigt ausschnittsweise eine perspektivische Ansicht einer Ausführungsform des erfindungsgemäßen Fahrzeugreifens im Bereich einer äußeren Reifenschulter 3. Die radiale Richtung des Fahrzeugreifens ist mit dem Doppelpfeil R, die um die Reifenachse gerichtete Umfangsrichtung mit dem Doppelpfeil U und die axiale Richtung mit dem Doppelpfeil A bezeichnet. Im Wesentlichen quer verlaufende gestrichelte Linien kennzeichnen Übergange der Reifenschulter 3 in eine Bodenaufstandsfläche 7 bzw. in eine Reifenseitenwand 1.

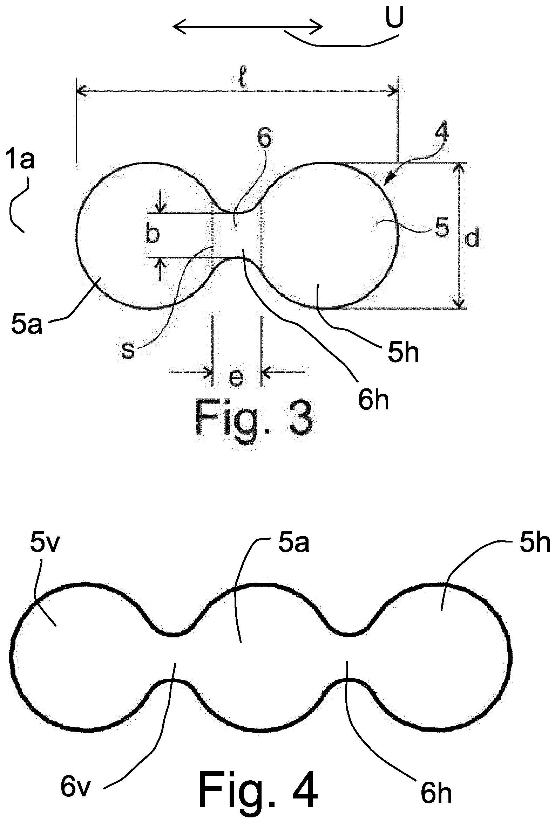

Aus der Bodenaufstandsfläche erstrecken sich Querrillen 9 in die Reifenschulter 3. Zwischen jeweils zwei Querrillen 9 ist jeweils ein Strukturbereich 2 ausgebildet. Ein Strukturbereich 2 umfasst jeweils Reihen 4 unterschiedlicher Länge und Anzahl, die unten anhand der Figuren 3 bis 8 im Einzelnen näher beschrieben werden. Die Strukturbereiche 2 sind in radialer bzw. axialer Richtung auf Höhe von Endabschnitten der Querrillen 9 angeordnet, die Rillen 9 erstrecken sich somit nur teilweise zwischen den Strukturbereichen 2.

Figur 2 zeigt ausschnittsweise eine perspektivische Ansicht einer Ausführungsform des erfindungsgemäßen Fahrzeugreifens im Bereich einer inneren Reifenschulter 3. Die Orientierung des gezeigten Ausschnitts und seine Anordnung im Reifen zwischen einer in Figur 2 nicht gezeigten Seitenwand 1 und einer ebenfalls nicht gezeigten Bodenaufstandsfläche 7 entspricht im Wesentlichen dem in Figur 1 gezeigten Schema. Ein Unterschied zwischen der Innenschulter 3 gemäß Figur 2 und der Außenschulter 3 gemäß Figur 1 besteht im Verlauf der Querrillen 9 sowie in den Details des Aufbaus und der Anordnung der Strukturbereiche 2. Insbesondere unterscheidet sich die Gestaltung der inneren Reifenschulter 3 dadurch von der Gestaltung der äußeren Reifenschulter 3, dass die Strukturbereiche 2 in radialer bzw. axialer Richtung vollständig innerhalb der Erstreckungslänge der Querrillen 9 angeordnet sind.

Die in den Figuren 1 und 2 gezeigten Strukturelemente 2 umfassen jeweils mehrere Reihen 4. Generell besteht eine Reihe 4 aus einer Vertiefung 5 oder aus einer zusammenhängenden Kombination von wenigstens zwei Vertiefungen 5 und wenigstens einer Verbindungsstelle 6. Vertiefungen 5 sind von einer Basisfläche 1a ausgehende, an der Basisfläche 1a von kreisförmig verlaufenden Rändern begrenzte und gemäß der bevorzugten Ausführung in Draufsicht übereinstimmend ausgeführte Senken. Wenn zwei oder mehr Vertiefungen 5 durch eine oder mehr Verbindungsstellen 6 verbunden sind, ergeben sich langgestreckte Reihen, die vorzugsweise ohne Krümmung bzw. Abzweigungen oder Knicke entlang der Umfangsrichtung U ausgerichtet sind.

Figur 3 zeigt die Außenkontur einer Reihe 4 mit zwei, bis auf die Einmündungsstellen einer Verbindungsstelle 6, kreisförmigen Vertiefungen 5 mit einem Durchmesser d, welcher 3,5 mm bis 6,0 mm, insbesondere in der Größenordnung von 5,0 mm beträgt. Die Verbindungsstelle 6 ist an der Basisfläche 1a von zueinander nach innen gewölbten Rändern begrenzt ist, welche jeweils im Bereich der Endpunkte einer Kreissehne s der Vertiefungen 5 tangential in die kreisförmig verlaufenden Ränder der Vertiefungen 5 übergehen. Die Kreissehnen s weisen eine Länge von 20% bis 70 %, insbesondere von 30% bis 40%, des Durchmessers der Vertiefungen 5 auf. In ihrer Mitte weisen die Verbindungsstellen 6 ihre schmalste Stelle mit einer Breite b auf, die 15% bis 30% des Durchmessers d der Vertiefungen 5 beträgt, insbesondere 0,5 mm bis 2,0 mm.

Die zwischen den Mittelpunkten der beiden Kreissehnen s ermittelte Erstreckungslänge e der Verbindungsstellen 6 beträgt 15% bis 30% des Durchmessers d, vorzugsweise in der Größenordnung von 0,5 mm bis 1,5 mm, sodass die gezeigte Variante einer Reihe 4 eine Erstreckungslänge I von vorzugsweise 8,5 mm bis 13,5 mm aufweist.

Die in Figur 3 gezeigte Reihe 4 verläuft entlang der Umfangsrichtung U. In der Figur ist links eine erste Vertiefung 5a abgebildet, die über eine in Umfangsrichtung hintere Verbindungsstelle 6h mit einer in der Figur rechts abgebildeten, in Umfangsrichtung hinteren Vertiefung 5h verbunden ist. Die gezeigte Reihe 4 umfasst zwei Vertiefungen 5 und eine Verbindungsstelle 6 und lässt sich somit durch n=2 beschreiben, wobei n die Anzahl der Vertiefungen 5 und n-1 die Anzahl der Verbindungsstellen 6 bezeichnet. Die durch n=2 beschriebene Reihe 4 wäre durch eine mit n=1 beschriebene Reihe 4, also durch eine alleinstehende Vertiefung 5, zu einem Minimalbeispiel eines erfindungsgemäßen Strukturbereichs 2 zu ergänzen, wobei an die Vertiefungen 5a, 5h jeweils eine Verbindungsstelle 6h angeschlossen ist und wobei an die alleinstehende Vertiefung 5 keine Verbindungsstelle 6 angeschlossen wäre.

Figur 4 zeigt die Außenkontur einer alternativen oder zusätzlichen in Umfangsrichtung verlaufenden Reihe 4 mit drei Vertiefungen 5a, 5v, 5h und zwei Verbindungen 6v, 6h, wobei die erste Vertiefung 5a über eine vordere Verbindungsstelle 6v mit einer vorderen Vertiefung 5v und über eine hintere Verbindungsstelle 6h mit einer hinteren Vertiefung 5h verbunden ist. Die Konturen der äußeren Vertiefungen 5v, 5h und die der Verbindungen 6v, 6h sind identisch zu den Konturen der in Figur 3 gezeigten Vertiefungen 5a, 5h bzw. der in Figur 3 gezeigten Verbindungsstelle 6. Die Kontur der mittleren Vertiefung 5a in Figur 4 ergibt sich durch Spiegeln einer beliebigen der beiden Vertiefungen 5a, 5h aus Figur 3 an einer zur Umfangsrichtung U senkrechten Kreissehne mit einer dem Durchmesser d entsprechenden Länge.

Die in Figur 4 gezeigte Reihe 4 wird durch n=3 beschrieben und stellt ein alternatives Minimalbeispiel eines erfindungsgemäßen Strukturbereiches 2 dar, wobei an die Vertiefungen 5h, 5v jeweils eine Verbindungsstelle 6v bzw. 6h angeschlossen ist und wobei an die erste Vertiefung 5 zwei Verbindungsstellen 6v, 6h angeschlossen sind.

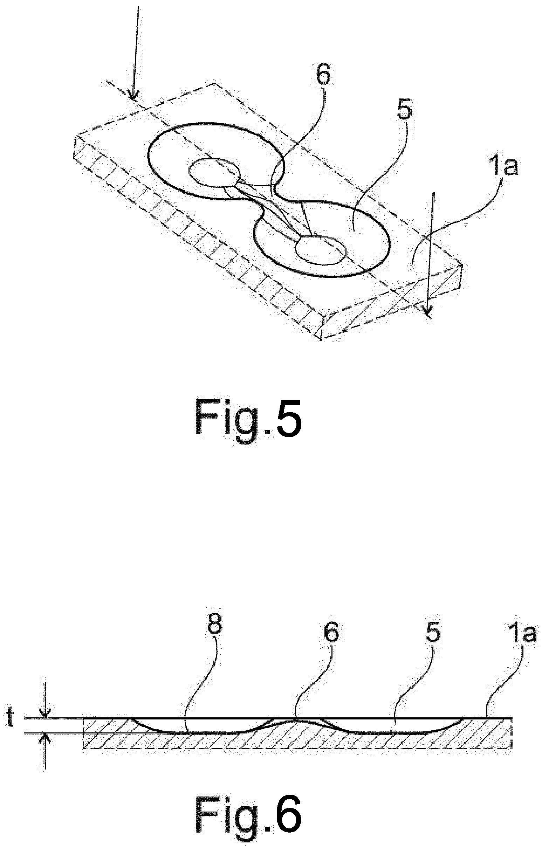

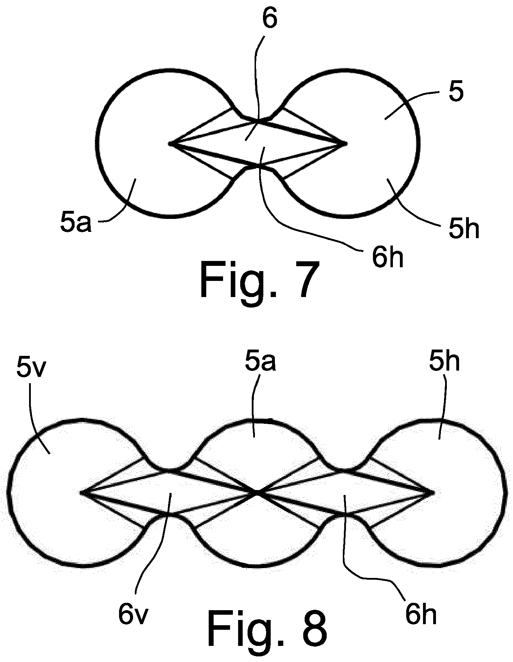

Die Figuren 5 bis 7 geben Einblick in die dreidimensionale Ausformung der Reihe 4 gemäß Figur 3 anhand einer perspektivischen Ansicht in Figur 5, in Figur 6 anhand einer Schnittansicht entlang der durch Pfeile gekennzeichneten gestrichelten Linie aus Fig. 5 und in Figur 7 anhand einer Draufsicht mit Höhenverlaufskonturen. Gemäß der gezeigten Ausführungsform sind die Vertiefungen 5 insgesamt gerundete Mulden mit einem muldenförmigen Boden 8 und ihrer tiefsten Stelle unter der Basisfläche 1a mit der Tiefe t im Bereich des Mittelpunktes ihrer Kreisform. Die Verbindungsstelle 6 ist eine lokale seichtere Verengung zwischen den beiden Vertiefungen 5.

Figur 8 gibt Einblick in die dreidimensionale Ausformung der Reihe 4 gemäß Figur 4 anhand einer Draufsicht mit Höhenverlaufskonturen. Die dreidimensionalen Ausformungen der äußeren Vertiefungen 5v, 5h und die der Verbindungen 6v, 6h sind identisch zu denen der in Figur 7 gezeigten Vertiefungen 5a, 5h bzw. der in Figur 7 gezeigten Verbindungsstelle 6. Die dreidimensionale Ausformung der mittleren Vertiefung 5a in Figur 4 ergibt sich durch Spiegeln einer beliebigen der beiden Vertiefungen 5a, 5h aus Figur 7 an einer Spiegelebene, wobei die Spiegelebene aufgespannt wird von einer zur Umfangsrichtung U senkrechten Kreissehne mit einer dem Durchmesser d entsprechenden Länge und einer Senkrechten auf der Basisfläche 1a, die in Figur der Zeichnungsebene entspricht.

Die in den Figuren 1 und 2 gezeigten Reihen 4 sind radial bzw. axial und in Umfangsrichtung gegeneinander versetzt, beispielsweise derart, dass, in radialer bzw. axialer Richtung betrachtet, eine Vertiefung 5 jeder Reihe 4 einer Verbindungsstelle 6 aus der benachbarten Reihe 4 gegenüberliegt oder eine Vertiefung 5 einem Abstand zwischen zwei in Umfangsrichtung U hintereinander angeordneten Reihen 4 zugeordnet ist.

Reifen mit gemäß der Erfindung gestalteten Strukturbereichen werden in einer Vulkanisationsform vulkanisiert, welche zur Ausbildung dieser Strukturbereiche im Bereich der Reifenschultern und/oder Reifenseitenwände entsprechende eingeprägte Strukturen, komplementär zu den Strukturbereichen und Strukturelementen ausgeführt, aufweisen. Die betreffenden Bestandteile der Vulkanisationsform sind daher Seitenschalen zur Ausbildung der Seitenwände und die schulterseitigen Bereiche von Profilsegmenten, welche die Laufstreifenprofilierung des Fahrzeugreifens einprägen. Die Strukturen werden vorzugweise mit einem materialabtragenden Verfahren, beispielsweise mittels eines Fräswerkzeuges, hergestellt.

### Bezugszeichenliste

- 1: Reifenseitenwand
- 1a: Basisfläche
- 2: Strukturbereich
- 3: Reifenschulter
- 4: Reihe
- 5: Vertiefung
- 5a: erste Vertiefung
- 5v: vordere Vertiefung
- 5h: hintere Vertiefung
- 6: Verbindungsstelle
- 6v: vordere Verbindungsstelle
- 6h: hintere Verbindungsstelle
- 7: Bodenaufstandsfläche
- 8: Boden
- 9: Quer-oder Schrägrille
- b: Breite
- d: Durchmesser
- e, I: Erstreckungslänge
- s: Kreissehne
- t: Tiefe
- U: Umfangsrichtung
- R: Radialrichtung
- A: Axialrichtung

## Patentansprüche

1. Fahrzeugreifen mit zumindest einem im Bereich zumindest einer Reifenschulter (3) und/oder zumindest einer Reifenseitenwand (1) ausgebildeten Strukturbereich (2) mit einer eine insbesondere glatte Oberfläche aufweisenden Basisfläche (1a), auf welcher wenigstens drei oberflächliche, in Draufsicht kreisförmigen Vertiefungen (5) ausgebildet sind, wobei wenigstens eine erste Vertiefung (5a) durch eine relativ zu der ersten Vertiefung (5a) in Umfangsrichtung vordere und/oder eine in Umfangsrichtung hintere Verbindungstelle (6v, 6h) mit einer in Umfangsrichtung vorderen und/oder einer in Umfangsrichtung hinteren Vertiefungen (5v, 5h) verbunden ist, wobei jede Verbindungsstelle (6) gegenüber dem Durchmesser der Vertiefungen (5) verengt ist,
**dadurch gekennzeichnet,**
**dass** die Anzahl der an eine Vertiefung (5) angeschlossenen Verbindungsstellen (6) für verschiedene Vertiefungen (5) wenigstens zwei verschiedene Werte aus der Wertemenge 0, 1 oder 2 annimmt.

2. Fahrzeugreifen nach Anspruch 1, **dadurch gekennzeichnet, dass** die verengten Verbindungsstellen (6) jeweils im Bereich der Endpunkte einer Kreissehne (s) der kreisförmigen Ränder der Vertiefungen (5) tangential in die kreisförmig verlaufenden Ränder der Vertiefungen (5) übergehen, wobei die Kreissehnen (s) eine Länge von 20% bis 70 %, insbesondere von 30% bis 40%, des Durchmessers (d) der Vertiefungen (5) aufweisen und in Radialrichtung bzw. Axialrichtung des Fahrzeugreifens verlaufen, wobei die verengten Verbindungsstellen (6) eine zwischen den Mittelpunkten der beiden Kreissehnen (s) ermittelte Erstreckungslänge (e) von 15% bis 30% des Durchmessers (d) der Vertiefungen (5) aufweisen.

3. Fahrzeugreifen nach einem der Ansprüche 1 oder 2, **dadurch gekennzeichnet, dass** die Vertiefungen (5) einen Durchmesser von 3,5 mm bis 6,0 mm und an ihrer tiefsten Stelle, bezogen auf das Niveau der Basisfläche (1a), eine Tiefe (t) von 0,3 mm bis 1,2 mm aufweisen.

4. Fahrzeugreifen nach einem oder mehreren der Ansprüche 1 bis 3, **dadurch gekennzeichnet, dass** sich der Boden (8) im Bereich einer verengten Verbindungstelle (6), bezogen auf das Niveau der Basisfläche (1a), in einer Tiefe, erstreckt, die höchsten der größten Tiefe (t) der Vertiefungen (5) entspricht und zumindest 0,1 mm beträgt.

5. Fahrzeugreifen nach einem der Ansprüche 1 bis 4, **dadurch gekennzeichnet, dass** die erste Vertiefung (5a), die relativ zu der ersten Vertiefung (5a) in Umfangsrichtung vordere und/oder hintere Verbindungstelle (6v, 6h) sowie die in Umfangsrichtung vordere und/oder hintere Vertiefung (5v, 5h) radial bzw. axial auf der gleichen Höhe liegen und zusammen eine durch n=2 oder n=3 beschriebene Reihe (4) bilden, wobei eine durch n beschriebene Reihe (4) eine Anzahl von n Vertiefungen (5) und n-1 Verbindungsstellen (6) umfasst, wobei n eine natürliche Zahl ungleich Null ist.

6. Fahrzeugreifen nach Anspruch 5, **dadurch gekennzeichnet, dass** der Strukturbereich wenigstens zwei Reihen (4) umfasst, die durch wenigstens zwei unterschiedliche n beschrieben werden.

7. Fahrzeugreifen nach Anspruch 6, **dadurch gekennzeichnet, dass** der Strukturbereich (2) eine durch n=k beschriebene Reihe (4) und eine durch n=m beschriebene Reihe (4) umfasst, die beide außerhalb einer Bodenaufstandsfläche (7) des Fahrzeugreifens angeordnet sind, wobei k<m und wobei die durch n=k beschriebene Reihe (4) radial bzw. axial dichter an einem Rand der Bodenaufstandsfläche (7) angeordnet ist als die durch n=m beschriebene Reihe (4).

8. Fahrzeugreifen nach einem oder mehreren der Ansprüche 5 bis 7, **dadurch gekennzeichnet, dass** der Strukturbereich (2) wenigstens zwei Reihen (4) umfasst, die in Umfangsrichtung hintereinander angeordnet sind und durch keine Verbindungsstelle (6) miteinander verbunden sind.

9. Fahrzeugreifen nach einem oder mehreren der Ansprüche 1 bis 8, **dadurch gekennzeichnet, dass** der Fahrzeugreifen mehrere in einer Reifenschulter (3) ausgebildete Strukturbereiche (2) umfasst, wobei sich wenigstens eine Quer- und/oder Schrägrille (9) zwischen zwei Strukturbereichen (2) erstreckt und vorzugsweise nur teilweise zwischen zwei Strukturbereichen (2) erstreckt.

10. Fahrzeugreifen nach einem oder mehreren der Ansprüche 1 bis 9, **dadurch gekennzeichnet, dass** der Fahrzeugreifen im Bereich einer äußeren Reifenschulter (3) und im Bereich einer inneren Reifenschulter (3) jeweils wenigstens einen Strukturbereich (2) umfasst,

11. Fahrzeugreifen nach Anspruch 10, **dadurch gekennzeichnet, dass** der Strukturbereich (2) auf der äußeren Reifenschulter (3) mehr Vertiefungen (5) und/oder Verbindungsstellen (6) umfasst als der Strukturbereich (2) auf der inneren Reifenschulter (3) und/oder **dadurch gekennzeichnet, dass** auf der äußeren Reifenschulter (3) mehr Strukturbereiche (2) ausgebildet sind als auf der inneren Reifenschulter (3) und/oder **dadurch gekennzeichnet, dass** der Fahrzeugreifen im Bereich der äußeren Reifenschulter (3) und im Bereich der inneren Reifenschulter (3) jeweils wenigstens zwei Strukturbereiche (2) umfasst, wobei sich auf der inneren Reifenschulter (3) wenigstens eine Quer- und/oder Schrägrille (9) vollständig zwischen zwei Strukturbereichen (2) erstreckt und wobei sich auf der äußeren Reifenschulter (3) wenigstens eine Quer- und/oder Schrägrille nur teilweise zwischen zwei Strukturbereichen (2) erstreckt.

## Claims

1. Vehicle tyre with at least one structural region (2) which is formed in the region of at least one tyre shoulder (3) and/or at least one tyre sidewall (1) and has a base area (1a) which has an in particular smooth surface and on which at least three superficial depressions (5) which are circular when seen from above are formed, wherein at least one first depression (5a) is connected by a front and/or rear connecting point (6v, 6h) in the circumferential direction relative to the first depression (5a) to a front and/or rear depression (5v, 5h) in the circumferential direction, wherein each connecting point (6) is narrowed in comparison with the diameter of the depressions (5),
**characterized**
**in that** the number of connecting points (6) which are connected to a depression (5) assumes at least two different values from the set of values 0, 1 or 2 for different depressions (5).

2. Vehicle tyre according to Claim 1, **characterized in that** the narrowed connecting points (6) respectively in the region of the end points of a chord (s) of the circular peripheries of the depressions (5) tangentially transition into the circularly extending peripheries of the depressions (5), wherein the chords (s) have a length of 20% to 70%, in particular of 30% to 40%, of the diameter (d) of the depressions (5) and extend in the radial direction or axial direction of the vehicle tyre, wherein the narrowed connecting points (6) have a length of extent (e), determined between the midpoints of the two cords (s), of 15% to 30% of the diameter (d) of the depressions (5).

3. Vehicle tyre according to either of Claims 1 and 2, **characterized in that** the depressions (5) have a diameter of 3.5 mm to 6.0 mm and at their deepest point, in relation to the level of the base area (1a), a depth (t) of 0.3 mm to 1.2 mm.

4. Vehicle tyre according to one or more of Claims 1 to 3, **characterized in that**, in the region of a narrowed connecting point (6), the bottom (8) extends in relation to the level of the base area (1a) at a depth which corresponds at most to the greatest depth (t) of the depressions (5) and is at least 0.1 mm.

5. Vehicle tyre according to one of Claims 1 to 4, **characterized in that** the first depression (5a), the front and/or rear connecting point (6v, 6h) in the circumferential direction relative to the first depression (5a) and the front and/or rear depression (5v, 5h) in the circumferential direction lie radially and axially at the same level and together form a series (4) described by n=2 or n=3, wherein a series (4) described by n comprises a number of n depressions (5) and n-1 connecting points (6), where n is a natural number other than zero.

6. Vehicle tyre according to Claim 5, **characterized in that** the structural region comprises at least two series (4), which are described by at least two different ns.

7. Vehicle tyre according to Claim 6, **characterized in that** the structural region (2) comprises a series (4) described by n=k and a series (4) described by n=m, which are both arranged outside a ground contact area (7) of the vehicle tyre, where k<m and where the series (4) described by n=k is arranged radially and axially closer to a periphery of the ground contact area (7) than the series (4) described by n=m.

8. Vehicle tyre according to one or more of Claims 5 to 7, **characterized in that** the structural region (2) comprises at least two series (4) which are arranged one behind the other in the circumferential direction and are not connected to one another by a connecting point (6).

9. Vehicle tyre according to one or more of Claims 1 to 8, **characterized in that** the vehicle tyre comprises a number of structural regions (2) formed in a tyre shoulder (3), wherein at least one transverse and/or diagonal groove (9) extends between two structural regions (2) and preferably extends only partially between two structural regions (2).

10. Vehicle tyre according to one or more of Claims 1 to 9, **characterized in that** the vehicle tyre comprises at least one structural region (2) respectively in the region of an outer tyre shoulder (3) and in the region of an inner tyre shoulder (3).

11. Vehicle tyre according to Claim 10, **characterized in that** the structural region (2) on the outer tyre shoulder (3) comprises more depressions (5) and/or connecting points (6) than the structural region (2) on the inner tyre shoulder (3) and/or **characterized in that** more structural regions (2) are formed on the outer tyre shoulder (3) than on the inner tyre shoulder (3) and/or **characterized in that** the vehicle tyre comprises at least two structural regions (2) respectively in the region of the outer tyre shoulder (3) and in the region of the inner tyre shoulder (3), wherein on the inner tyre shoulder (3) at least one transverse and/or diagonal groove (9) extends completely between two structural regions (2) and wherein on the outer tyre shoulder (3) at least one transverse and/or diagonal groove extends only partially between two structural regions (2).

## Revendications

1. Pneumatique pour véhicule, comprenant au moins une zone structurelle (2) formée dans la zone d'au moins un épaulement (3) et/ou d'au moins une paroi latérale (1) du pneumatique, ayant une surface de base (1a) présentant une surface particulièrement lisse, sur laquelle sont formés au moins trois dépressions (5) superficielles, circulaires en vue de dessus, au moins une première dépression (5a) étant reliée, par un point de jonction (6v, 6h) situé à l'avant et/ou à l'arrière de la première dépression (5a) dans la direction circonférentielle, à une dépression (5v, 5h) située à l'avant et/ou à l'arrière dans la direction circonférentielle, chaque point de jonction (6) étant rétréci par rapport au diamètre des dépressions (5), **caractérisé en ce que**
le nombre de points de jonction (6) raccordés à une dépression (5) pour différentes dépressions (5) prend au moins deux valeurs différentes parmi l'ensemble des valeurs 0, 1 ou 2.

2. Pneumatique pour véhicule selon la revendication 1, **caractérisé en ce que** les points de jonction rétrécis (6) se prolongent tangentiellement dans les bords circulaires des dépressions (5), respectivement dans la zone des points d'extrémité d'une corde (s) des bords circulaires des dépressions (5), les cordes (s) présentant une longueur comprise entre 20% et 70%, en particulier entre 30% et 40%, du diamètre (d) des dépressions (5) et s'étendant dans la direction radiale ou axiale du pneumatique de véhicule, les points de jonction rétrécis (6) présentant une longueur (e) déterminée entre les centres des deux cordes circulaires (s) comprise entre 15% et 30% du diamètre (d) des dépressions (5).

3. Pneumatique pour véhicule selon l'une des revendications 1 ou 2, **caractérisé en ce que** les dépressions (5) ont un diamètre allant de 3,5mm à 6,0mm et, à leur point le plus profond par rapport au niveau de la surface de base (1a), une profondeur (t) allant de 0,3mm à 1,2mm.

4. Pneumatique pour véhicule selon une ou plusieurs des revendications 1 à 3, **caractérisé en ce que** le fond (8) s'étend, dans la zone d'un point de jonction rétréci (6), par rapport au niveau de la surface de base (1a), à une profondeur qui correspond au plus à la plus grande profondeur (t) des dépressions (5) et qui est d'au moins 0,1mm.

5. Pneumatique pour véhicule selon l'une des revendications 1 à 4, **caractérisé en ce que** la première dépression (5a), le point de jonction avant et/ou arrière (6v, 6h) dans la direction circonférentielle par rapport à la première dépression (5a), ainsi que la dépression avant et/ou arrière (5v, 5h) dans la direction circonférentielle radialement ou axialement à la même hauteur, et forment ensemble une rangée (4) décrite par n=2 ou n=3, une rangée (4) décrite par n comprenant un nombre de n dépressions (5) et n-1 points de jonction (6), n étant un nombre naturel différent de zéro.

6. Pneumatique pour véhicule selon la revendication 5, **caractérisé en ce que** la zone structurelle comprend au moins deux rangées (4) décrites par au moins deux n différents.

7. Pneumatique pour véhicule selon la revendication 6, **caractérisé en ce que** la zone structurelle (2) comprend une rangée (4) décrite par n=k et une rangée (4) décrite par n=m, qui sont toutes deux agencées à l'extérieur d'une surface de contact avec le sol (7) du pneumatique pour véhicule, k<m, et la rangée (4) décrite par n=k étant agencée radialement ou axialement plus près d'un bord de la surface de contact au sol (7) que la rangée (4) décrite par n=m.

8. Pneumatique pour véhicule selon l'une ou plusieurs des revendications 5 à 7, **caractérisé en ce que** la zone structurelle (2) comprend au moins deux rangées (4) qui sont agencées l'une derrière l'autre dans la direction circonférentielle et qui ne sont pas reliées entre elles par un point de jonction (6).

9. Pneumatique pour véhicule selon une ou plusieurs des revendications 1 à 8, **caractérisé en ce que** le pneumatique pour véhicule comprend plusieurs zones structurelles (2) formées dans un épaulement de pneumatique (3), au moins une rainure transversale et/ou oblique (9) s'étendant entre deux zones structurelles (2) et s'étendant de préférence seulement partiellement entre deux zones structurelles (2).

10. Pneumatique pour véhicule selon une ou plusieurs des revendications 1 à 9, **caractérisé en ce que** le pneumatique pour véhicule comprend au moins une zone structurelle (2) dans la zone d'un épaulement extérieur (3) du pneumatique et dans la zone d'un épaulement intérieur (3) du pneumatique.

11. Pneumatique pour véhicule selon la revendication 10, **caractérisé en ce que** la zone structurelle (2) sur l'épaulement extérieur (3) du pneumatique comprend plus de dépressions (5) et/ou de points de liaison (6) que la zone structurelle (2) sur l'épaulement intérieur (3) du pneumatique et/ou **caractérisé en ce que** l'épaulement extérieur (3) du pneumatique comprend plus de zones structurelles (2) que l'épaulement intérieur (3) du pneumatique, et/ou **caractérisé en ce que** le pneumatique de véhicule comprend au moins deux zones structurelles (2) dans la zone de l'épaulement extérieur (3) du pneumatique et dans la zone de l'épaulement intérieur (3) du pneumatique, au moins une rainure transversale et/ou oblique (9) s'étendant complètement entre deux zones structurelles (2) sur l'épaulement intérieur (3) du pneumatique et au moins une rainure transversale et/ou oblique s'étendant seulement partiellement entre deux zones structurelles (2) sur l'épaulement extérieur (3) du pneumatique.
